# EUROPEAN PATENT APPLICATION

(11) **EP 4 567 916 A1**
(43) Date of publication of application: **11.06.2025**
(21) Application number: 22953656.0
(22) Date of filing: 05.08.2022
(51) Int. Cl.: H01M 4/13, H01M 10/058

(54) **BATTERY CELL, BATTERY, AND ELECTRIC DEVICE**

(71) Applicant: CONTEMPORARY AMPEREX TECHNOLOGY (HONG KONG) LIMITED, Hong Kong (HK)
(72) Inventor: CHANG, Wen, Ningde, Fujian 352100 (CN); FU, Chenghua, Ningde, Fujian 352100 (CN); YE, Yonghuang, Ningde, Fujian 352100 (CN); GUO, Suogang, Ningde, Fujian 352100 (CN)
(74) Representative: Ran, Handong
(86) International application number: PCT/CN2022/110631
(87) International publication number: WO 2024/026851

(57) **Abstract**

Embodiments of the present application provide a battery cell, a battery, and an electric device. The battery cell comprises an electrode assembly. The electrode assembly comprises: a negative electrode sheet comprising a negative electrode current collector and a negative electrode active material layer, wherein the negative electrode current collector comprises a negative electrode body and a negative electrode tab, and at least part of the negative electrode active material layer is arranged on the surface of the negative electrode body; and a positive electrode sheet comprising a positive electrode current collector and a positive electrode active material layer, wherein the positive electrode current collector comprises a positive electrode body and a positive electrode tab, the positive electrode tab extends from a first edge of the positive electrode body, the positive electrode active material layer is arranged on the surface of the positive electrode body, and in the thickness direction of the negative electrode body, the projection of the positive electrode active material layer on the negative electrode sheet falls within the negative electrode active material layer. The negative electrode sheet further comprises a first insulating layer. The first insulating layer is arranged on the negative electrode current collector, and in the thickness direction of the negative electrode body, the projection of the first edge on the negative electrode sheet falls within the first insulating layer. The battery cell has high safety.

## Description

### TECHNICAL FIELD

This application relates to the technical field of batteries, and in particular, to a battery cell, a battery, and an electrical device.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

**In** the development of battery technology, in addition to increasing the energy density of a battery, improving the safety of the battery is essential. Therefore, how to improve the safety of a battery is a pressing technical challenge in the battery technology.

### SUMMARY

An objective of this application is to provide a battery cell, a battery, and an electrical device. The safety of the battery cell is relatively high.

This application is implemented through the following technical solutions:

According to a first aspect, this application provides a battery cell. The battery cell includes an electrode assembly. The electrode assembly includes: a negative electrode plate, including a negative current collector and a negative active material layer, where the negative current collector includes a negative electrode body and a negative tab, the negative tab protrudes beyond the negative electrode body, and at least a part of the negative active material layer is disposed on a surface of the negative electrode body; and a positive electrode plate, including a positive current collector and a positive active material layer, where the positive current collector includes a positive electrode body and a positive tab. The positive tab extends out from a first edge of the positive electrode body along a first direction. The positive active material layer is disposed on a surface of the positive electrode body. Along a thickness direction of the negative electrode body, a projection of the positive active material layer on the negative electrode plate falls into the negative active material layer. The negative electrode plate further includes a first insulation layer. The first insulation layer is disposed on the negative current collector. Along the thickness direction of the negative electrode body, a projection of the first edge on the negative electrode plate falls into the first insulation layer.

In the battery cell according to an embodiment of this application, the first insulation layer is disposed on the negative current collector. The projection of the first edge on the negative electrode plate falls into the first insulation layer, so as to enhance the effect of insulation between the negative electrode plate and an edge of the positive electrode body, where the edge is formed when cutting out a positive tab from the positive electrode body. This reduces the risk that the burrs on the first edge pierce a separator to cause direct contact and a short circuit between the positive electrode plate and the negative electrode plate, and improves the safety of the battery cell.

According to some embodiments of this application, the negative electrode body includes a second edge close to the first edge. The second edge exceeds the first edge along the first direction.

In the above technical solution, because the negative active material layer exceeds the positive active material layer and the second edge exceeds the first edge, the negative active material layer is allowed to be large in dimension in the first direction, thereby enabling a relatively high capacity of the negative active material layer and the positive active material layer, and achieving a relatively high energy density of the battery cell.

According to some embodiments of this application, the first insulation layer covers a part of the negative active material layer.

In the above technical solution, the first insulation layer covers a part of the negative active material layer, so that the negative active material layer can be disposed in a relatively large area on the negative electrode body. Therefore, the capacity of the negative active material layer is relatively large, and the capacity of the positive active material layer can also be made relatively large.

According to some embodiments of this application, the negative active material layer extends to the second edge.

In the above technical solution, the negative active material layer extends to the second edge, so that the negative active material layer occupies a relatively large area on the negative electrode body, thereby making the capacity of the negative active material layer be relatively large.

According to some embodiments of this application, the negative tab extends out from the second edge. Along the first direction from the negative electrode body to the negative tab, the first insulation layer exceeds the second edge and covers a part of the negative tab.

In the above technical solution, the first insulation layer exceeds the second edge and covers a part of the negative tab. The first insulation layer covers a relatively large area on the negative current collector, thereby reducing the risk of contact and a short circuit between the positive electrode plate and the negative electrode plate.

According to some embodiments of this application, along the first direction, an overlay dimension by which the first insulation layer covers the negative tab is E1, satisfying: 0 < E1 ≤ 8 mm, and preferably 1 mm ≤ E1 ≤ 3 mm.

In the above technical solution, the overlay dimension by which the first insulation layer covers the negative tab falls within the above range, thereby avoiding interference with the connection between the negative tab and other components (such as an adapter piece) while producing a good insulation effect. If the overlay dimension by which the first insulation layer covers the negative tab is unduly small, the insulation effect is relatively weak. If the overlay dimension by which the first insulation layer covers the negative tab is unduly large, the first insulation layer occupies a relatively large dimension of the negative tab in the first direction, thereby interfering with the connection between the negative tab and other components.

According to some embodiments of this application, along the first direction, an overlay dimension by which the first insulation layer covers the negative electrode body is F1, satisfying: 3 mm ≤ F1 ≤ 10 mm.

In the above technical solution, the overlay dimension by which the first insulation layer covers the negative electrode body falls within the above range, thereby being able to constrain the position of the first edge of the positive electrode body. This creates a relatively large dimension of the positive electrode body in the first direction and a relatively large dimension of the positive active material layer while achieving a relatively good insulation effect, thereby achieving a relatively high capacity of the positive active material layer, and in turn, a relatively high energy density of the battery cell.

According to some embodiments of this application, the negative active material layer includes a thinned region and a main region. The thinned region and the main region are arranged along the first direction. A thickness of the thinned region is less than a thickness of the main region. The first insulation layer covers the thinned region.

In the above technical solution, the first insulation layer covers the thinned region so that the total thickness of the negative active material layer and the first insulation layer covering the negative active material layer is relatively small, thereby reducing the risk of lithium plating.

According to some embodiments of this application, along the thickness direction of the negative electrode body, a sum of thicknesses of the first insulation layer and the thinned region is H1, and a thickness of the main region is H2, satisfying: -2 mm ≤ H1 - H2 ≤ 2 mm.

In the above technical solution, the sum H1 of the thicknesses of the first insulation layer and the thinned region as well as the thickness H2 of the main region satisfy the above relationship, so that the distance between the negative electrode plate and the positive electrode plate is relatively short, thereby facilitating movement of metal ions and reducing the risk of lithium plating. If the sum H1 of the thicknesses of the first insulation layer and the thinned region is unduly small, then the distance between the surface of the first insulation layer and the surface of the main region is relatively large along the thickness direction of the negative electrode body. At the thinned region, the thickness of the negative active material layer is relatively small, and the capacity of the negative active material layer is relatively low. If the sum H1 of the thicknesses of the first insulation layer and the thinned region is unduly large, then the surface of the first insulation layer protrudes beyond the surface of the main region, thereby increasing the distance between the main region and the positive electrode plate and being prone to lithium plating.

According to some embodiments of this application, the positive active material layer includes a third edge close to the first edge. Along the first direction from the positive electrode body to the positive tab, an excess dimension by which the negative active material layer exceeds the third edge is C1, satisfying: 0.5 mm ≤ C1 ≤ 3 mm, and preferably 1 mm ≤ C1 ≤ 2 mm.

In the above technical solution, the excess dimension C1 by which the negative active material layer exceeds the third edge falls within the above range, thereby making it convenient to control the excess dimension by which the negative active material layer exceeds the positive active material layer, and reducing the risk of lithium plating.

According to some embodiments of this application, the positive electrode plate further includes a second insulation layer. The second insulation layer is disposed on the positive current collector, and the second insulation layer extends to the first edge.

In the above technical solution, the second insulation layer can wrap the burrs on the first edge, thereby making it more difficult for the burrs to pierce the separator, and reducing the risk of contact and a short circuit between the positive electrode plate and the negative electrode plate.

According to some embodiments of this application, the second insulation layer and the positive active material layer are arranged along the first direction.

In the above technical solution, the second insulation layer and the positive active material layer are arranged along the first direction, thereby facilitating the assembling of the second insulation layer and the positive current collector, preventing the second insulation layer from covering the positive active material layer so as to avoid an increase in the distance between the positive active material layer and the negative electrode plate, and reducing the risk of lithium plating.

According to some embodiments of this application, along the first direction, an overlay dimension by which the second insulation layer covers the positive electrode body is M1, and a dimension of the positive electrode body is M2, satisfying: 0.2% ≤ M1/M2 ≤ 2.8%, and preferably 0.4% ≤ M1/M2 ≤ 2%.

In the above technical solution, along the first direction, the ratio of the overlay dimension M1 of the second insulation layer on the positive electrode body to the dimension M2 of the positive electrode body falls within the above range. In this way, the second insulation layer produces a good insulation effect, the dimension occupied by the second insulation layer in the first direction is relatively small, and the capacity of the positive active material layer can be relatively high.

According to some embodiments of this application, along the thickness direction of the negative electrode body, a projection of the second insulation layer on the negative electrode plate falls into the first insulation layer.

In the above technical solution, the projection of the second insulation layer on the negative electrode plate falls into the first insulation layer. Therefore, the overlap area between the second insulation layer and the first insulation layer is relatively large, and the first insulation layer produces a good insulation effect. At the same time, the dimension of the second insulation layer in the first direction is relatively small, so that the capacity of the positive active material layer is relatively high, thereby endowing the battery cell with a relatively high energy density.

According to some embodiments of this application, along the first direction from the positive tab to the positive electrode body, the first insulation layer exceeds the second insulation layer.

In the above technical solution, the first insulation layer exceeds the second insulation layer, the dimension of the second insulation layer in the first direction is relatively small, and the dimension of the positive active material layer in the first direction is relatively large, so that the capacity of the positive active material layer is relatively high.

According to some embodiments of this application, along the first direction, a dimension of the negative active material layer is D1, a dimension of the positive active material layer is D2, and a dimension of the second insulation layer is M1, satisfying: M1 ≤ (D1 - D2)/2.

In the above technical solution, along the first direction, the dimension of the second insulation layer, the dimension of the negative active material layer, and the dimension of the positive active material layer satisfy the above relationships. The dimension of the second insulation layer is relatively small, and the second insulation layer occupies a relatively small space in the first direction. The dimension of the positive active material layer in the first direction can be relatively large, thereby endowing the battery cell with a relatively high energy density.

According to some embodiments of this application, the second insulation layer includes a fourth edge close to the first edge. Along the first direction from the positive electrode body to the positive tab, an excess dimension by which the first insulation layer exceeds the fourth edge is C2, satisfying: 0 < C2 ≤ 2.5 mm.

In the above technical solution, the excess dimension by which the first insulation layer exceeds the fourth edge satisfies the above relationship, so as to control the dimension of the first insulation layer in the first direction, achieve a good insulation effect between the positive electrode plate and the negative electrode plate, and endow the battery cell with relatively high safety.

According to some embodiments of this application, along the first direction, an overlay dimension by which the second insulation layer covers the positive electrode body is M1, satisfying: 0.3 mm ≤ M1 ≤ 1.5 mm, and preferably 0.5 mm ≤ M1 ≤ 1 mm.

In the above technical solution, the overlay dimension by which the second insulation layer covers the positive electrode body satisfies the above relationship. Therefore, the second insulation layer produces a good insulation effect, and moreover, the space occupied by the second insulation layer in the first direction is relatively small. If the overlay dimension by which the second insulation layer covers the positive electrode body is unduly small, the insulation effect of the second insulation layer is relatively low. If the overlay dimension by which the second insulation layer covers the positive electrode body is unduly large, then the space occupied by the second insulation layer in the first direction is relatively large, the dimension of the positive active material layer in the first direction is relatively small, and the capacity of the positive active material layer is relatively low, thereby impairing the energy density of the battery cell.

According to some embodiments of this application, along the first direction from the positive electrode body to the positive tab, the second insulation layer exceeds the first edge and covers a part of the positive tab.

In the above technical solution, the second insulation layer exceeds the first edge and covers a part of the positive tab. The second insulation layer covers a relatively large area on the positive current collector, thereby reducing the risk of contact and a short circuit between the positive electrode plate and the negative electrode plate.

According to some embodiments of this application, an overlay dimension by which the second insulation layer covers the positive tab is E2, satisfying: 0 < E2 ≤ 8 mm, and preferably 1 mm ≤ E2 ≤ 3 mm.

In the above technical solution, the overlay dimension by which the second insulation layer covers the positive tab falls within the above range, thereby avoiding interference with the connection between the positive tab and other components (such as an adapter piece) while producing a good insulation effect. If the overlay dimension by which the second insulation layer covers the positive tab is unduly small, the insulation effect is relatively weak. If the overlay dimension by which the second insulation layer covers the positive tab is unduly large, the second insulation layer occupies a relatively large dimension of the positive tab in the first direction, thereby interfering with the connection between the positive tab and other components.

According to some embodiments of this application, a thickness of the second insulation layer is H3, a thickness of the positive current collector is H4, and a thickness of the positive active material layer is H5, satisfying: H3 > H4, and H3 ≤ H5.

In the above technical solution, the thickness of the second insulation layer is greater than the thickness of the positive electrode collector, thereby effectively wrapping the burrs generated in a process of cutting out the positive tab, and making it more difficult for the burrs to pierce the second insulation layer. The thickness of the second insulation layer is less than or equal to the thickness of the positive active material layer, so that the second insulation layer occupies just a relatively small space in the thickness direction of the positive current collector, thereby reducing the risk of lithium plating.

According to some embodiments of this application, the second insulation layer includes a ceramic layer or a macromolecular polymer layer.

In the above technical solution, when the second insulation layer includes a ceramic layer, the particles of the ceramic material of the ceramic layer are relatively large, and metal ions can pass through the ceramic layer, thereby facilitating movement of the metal ions. When the second insulation layer includes a macromolecular polymer layer, the second insulation layer produces a good insulation effect, thereby reducing the risk of contact and a short circuit between the positive electrode plate and the negative electrode plate.

According to some embodiments of this application, the first insulation layer includes a ceramic layer.

In the above technical solution, when the first insulation layer includes a ceramic layer, the particles of the ceramic material of the ceramic layer are relatively large, and metal ions can pass through the ceramic layer, thereby facilitating movement of the metal ions, without affecting the activity of the active material.

According to some embodiments of this application, the ceramic layer includes a water-based ceramic slurry or an oil-based ceramic slurry.

In the above technical solution, when the ceramic layer includes a water-based ceramic slurry, the content of the ceramic material is relatively high, thereby facilitating the migration of metal ions and the storage of an electrolyte solution. When the ceramic layer includes an oil-based ceramic slurry, the ceramic layer produces a good insulation effect.

According to a second aspect, this application provides a battery. The battery includes a box and a plurality of battery cells disclosed in the above embodiment. The plurality of battery cells are disposed in the box.

According to a third aspect, this application provides an electrical device. The electrical device includes the battery cell disclosed in the above embodiment. The battery cell is configured to provide electrical energy.

Additional aspects and advantages of this application will be partly given in the following description, and a part thereof will become evident in the following description or will be learned in the practice of this application.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode assembly according to some embodiments of this application;
FIG. 5 is a cross-sectional view of sectioning along an A-A line shown in FIG. 4;
FIG. 6 is a schematic structural diagram of an electrode assembly according to some other embodiments of this application;
FIG. 7 is a schematic structural diagram of an electrode assembly according to other embodiments of this application;
FIG. 8 is a cross-sectional view of sectioning along a B-B line shown in FIG. 7; and
FIG. 9 is a schematic structural diagram of an electrode assembly according to still some other embodiments of this application.

The drawings are not drawn to scale.

List of reference numerals: 100-battery; 10-box; 11-first sub-box; 12-second sub-box; 20-battery cell; 21-housing; 22-end cap; 22a-electrode terminal; 23-electrode assembly; 231-negative electrode plate; 2311-negative current collector; 2311a-negative electrode body; 2311b-negative tab; 2311c-second edge; 2312-negative active material layer; 2312a-thinned region; 2312 b-main region; 2313-first insulation layer; 232-positive electrode plate; 2321-positive current collector; 2321a-positive electrode body; 2321b-positive tab; 2321c-first edge; 2322-positive active material layer; 2322a-third edge; 2323-second insulation layer; 2323a-fourth edge; 233-separator; 24-adapter piece; 200-controller; 300-motor; 1000-vehicle.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

"A plurality of" referred to in this application means two or more (including two). Similarly, "a plurality of groups" means two or more groups (including two groups), and "a plurality of pieces" means two or more pieces (including two pieces).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as a flat body, a cuboid, or another shape. The shape of the battery cell is not limited herein.

The battery mentioned in this application means a unitary physical module that includes one or more battery cells to provide a higher voltage and a higher capacity. For example, the battery mentioned in this application may include a battery module and the like.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as PP (polypropylene, polypropylene) or PE (polyethylene, polyethylene). In addition, the electrode assembly may be of a jelly-roll type structure or a stacked type structure, without being limited herein. The positive tab and the negative tab may extend out from the same side from two opposite sides respectively, without being limited herein.

During formation of an electrode plate, an active material layer is typically applied onto a surface of the current collector, and then tabs are cut out at the edge of the current collector. After the electrode plates are formed, the positive electrode plate, the separator, and the negative electrode plate are stacked, wound, or placed to form an electrode assembly.

The development of the battery technology needs to consider a plurality of design factors, including performance parameters such as energy density, discharge capacity, charge rate, and discharge rate, and also needs to consider safety of the battery.

For a battery cell, many factors affect the safety, such as ambient temperature, a short circuit between the positive electrode and the negative electrode, lithium plating, and untimely pressure relief.

In the prior art, in order to reduce the risk of lithium plating, the negative current collector may be disposed beyond the positive current collector. When a positive tab is cut from a positive electrode plate, the cutting in a region of the positive active material layer is prone to generate metallic molten beads and make the active material fall off from the edge. Therefore, the positive tab is generally cut out in a blank foil region of the positive current collector. However, cutting the out a positive tab in the blank foil region is prone to produce burrs. When the positive electrode plate and the negative electrode plate are stacked up, the burrs generated on the edge of the positive electrode plate when cutting out the positive tab are prone to pierce the separator to result in contact and a short circuit between the positive electrode plate and the negative electrode plate, thereby posing safety hazards.

In view of this, in order to solve the problem that the burrs on the edge of the cut positive electrode plate pierce the separator, result in contact and a short circuit between the positive electrode plate and the negative electrode plate, and thereby result in low safety of the battery cell, the inventor hereof has designed a technical solution through in-depth research. In the technical solution, a first insulation layer is disposed on the negative current collector. The projection of an edge of the positive electrode plate on the negative electrode plate falls into the first insulation layer, where the edge is formed by cutting out a positive tab from the positive electrode plate. This technical solution enhances the effect of insulation between the negative electrode plate and the edge of the positive electrode plate from which the positive tab is cut out, and makes it more difficult for the burrs to pierce the separator and contact the negative electrode plate, thereby reducing the risk that the burrs pierce the separator and then directly contact the negative electrode plate to cause a short circuit, and improving the safety of the battery cell.

The battery cell disclosed in this embodiment of this application is applicable to, but without being limited to, electrical devices such as a vehicle, watercraft, or aircraft. A power supply system of the electrical device may be formed of the battery cells disclosed herein.

An embodiment of this application provides an electrical device that uses a battery cell as a power supply. The electrical device may be, but is not limited to, mobile phone, tablet computer, laptop computer, electric toy, electric tool, electric bicycle, electric motorcycle, electric vehicle, ship, spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

For ease of description in the following embodiments, a vehicle is used as an example of the electrical device disclosed in an embodiment of this application.

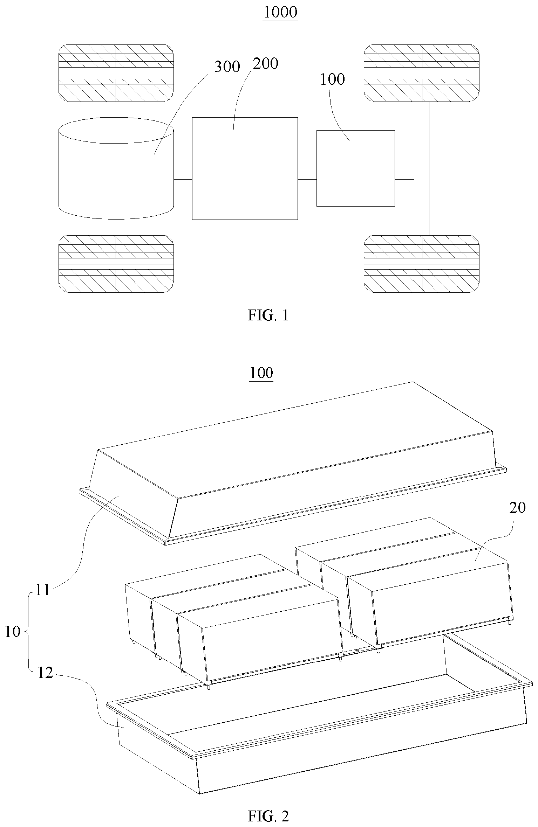

Referring to FIG. 1, FIG. 1 is a schematic structural diagram of a vehicle according to some embodiments of this application. The vehicle 1000 may be an oil-fueled vehicle, a natural gas vehicle, or a new energy vehicle. The new energy vehicle may be a battery electric vehicle, a hybrid electric vehicle, a range-extended electric vehicle, or the like. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000 to power a circuit system of the vehicle 1000. For example, the battery may be configured to meet operating power usage requirements of the vehicle 1000 that is being started or navigated or running.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery according to some embodiments of this application. The battery 100 includes a box 10 and a battery cell 20. The battery cell 20 is accommodated in the box 10. The box 10 is configured to provide an accommodation space for the battery cell 20. The box 10 may be in various structures. In some embodiments, the box 10 may include a first sub-box 11 and a second sub-box 12. The first sub-box 11 and the second sub-box 12 fit each other. The first sub-box 11 and the second sub-box 12 together define an accommodation space configured to accommodate the battery cell 20. The second sub-box 12 may be a hollow structure that is opened at one end. The first sub-box 11 may be a plate-like structure. The first sub-box 11 fits the opening of the second sub-box 12 so that the first sub-box 11 and the second sub-box 12 together define the accommodation space. Alternatively, both the first sub-box 11 and the second sub-box 12 are hollow structures opened at one end. The opening of the first sub-box 11 fits the opening of the second sub-box 12.

The battery 100 may contain a plurality of battery cells 20. The plurality of battery cells 20 may be connected in series, parallel, or series-and-parallel pattern. The series-and-parallel pattern means a combination of series connection and parallel connection of the plurality of battery cells 20. The plurality of battery cells 20 may be directly connected in series, parallel, or series-and-parallel pattern, and then the whole of the plurality of battery cells 20 may be accommodated in the box 10. Alternatively, to make up a battery 100, the plurality of battery cells 20 may be connected in series, parallel, or series-and-parallel pattern to form a battery module first, and then a plurality of battery modules are connected in series, parallel, or series-and-parallel pattern to form a whole and accommodated in the box 10. The battery 100 may further include other structures. For example, the battery 100 may further include a busbar component 30. The busbar component is configured to implement electrical connection between the plurality of battery cells 20.

The battery cell 20 may be a secondary battery or primary battery. The battery cell 20 may be, but is not limited to, a lithium-sulfur battery, a sodium-ion battery, or a magnesium-ion battery.

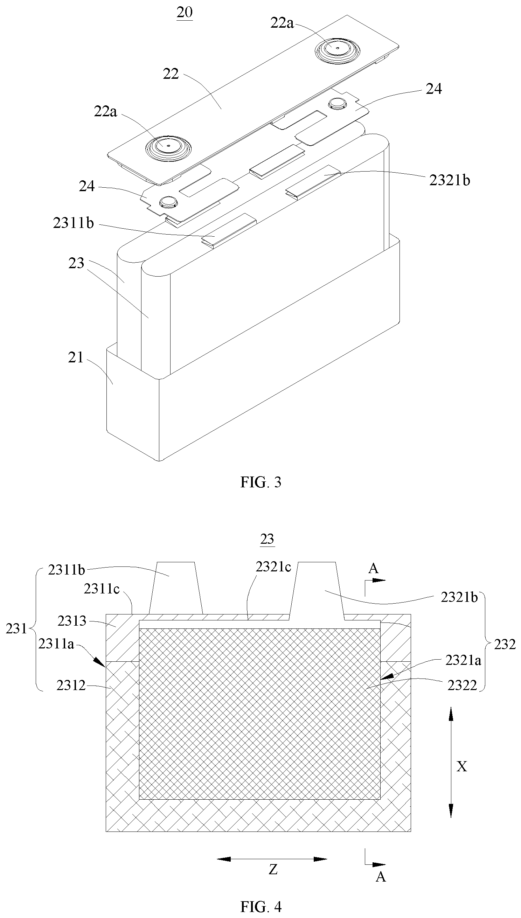

Referring to FIG. 3, FIG. 3 is an exploded view of a battery cell according to some embodiments of this application. The battery cell 20 is a minimum unit of a battery 100. As shown in FIG. 3, the battery cell 20 includes a housing 21, an end cap 22, an electrode assembly 23, and an adapter piece 24.

The housing 21 is a component configured to fit the end cap 22 to form an internal environment of the battery cell 20. The formed internal environment may be used to accommodate the electrode assembly 23, an electrolyte solution, and other components. The housing 21 and the end cap 22 may be stand-alone components. An opening may be created on the housing 21. At the opening, the end cap 22 fits and covers the opening to form the internal environment of the battery cell 20. The housing 21 may vary in shape and size. For example, the housing is cuboidal, cylindrical, hexagonal prismatic, or the like. Specifically, the shape of the housing 21 may depend on the specific shape and size of the electrode assembly 23. The housing 21 may be made of a variety of materials such as copper, iron, aluminum, stainless steel, aluminum alloy, or plastic, without being particularly limited herein.

The end cap 22 is a component that fits and covers the opening of the housing 21 to isolate the internal environment of the battery cell 20 from the external environment. Without limitation, the shape of the end cap 22 may be adapted to the shape of the housing 21 to fit the housing 21. Optionally, the end cap 22 may be made of a material of appropriate hardness and strength (such as aluminum alloy), so that the end cap 22 is not prone to deform when squeezed or impacted. In this way, the battery cell 20 achieves higher structural strength and higher safety performance. An electrode terminal 22a is disposed on the end cap 22. The electrode terminal 22a may be configured to be electrically connected to the electrode assembly 23 to output or input electrical energy of the battery cell 20. The end cap 22 may also be made of a variety of materials such as copper, iron, aluminum, stainless steel, aluminum alloy, or plastic, and the materials are not particularly limited herein. In some embodiments, an insulation structure may be further disposed on the inner side of the end cap 22. The insulation structure may be configured to isolate an electrically connected component in the housing 21 from the end cap 22 to reduce short-circuit risks. For example, the insulation structure may be plastic, rubber, or the like.

The electrode assembly 23 is a component in which electrochemical reactions occur in the battery cell 20. The housing 21 may contain one or more electrode assemblies 23. The electrode assembly 23 is typically formed of a positive electrode plate and a negative electrode plate that are wound or stacked together. Generally, a separator is disposed between the positive electrode plate and the negative electrode plate. The separator is configured to dielectrically isolate the positive electrode plate from the negative electrode plate. The parts, coated with an active material layer, of the positive electrode plate and the negative electrode plate, constitute a main body of the electrode assembly 23. The part, coated with no active material layer, of the positive electrode plate and the negative electrode plate separately, constitutes a tab. The positive tab and the negative tab may be located at one end of the main body together or located at two ends of the main body respectively. In a charging or discharging process of the battery, the positive active material and the negative active material react with an electrolyte solution. The tab is connected to the electrode terminal 22a to form a current circuit.

The adapter piece 24 is a component configured to connect the electrode terminal 22a and the tab. The electrode terminal 22a is electrically connected to the tab by the adapter piece 24.

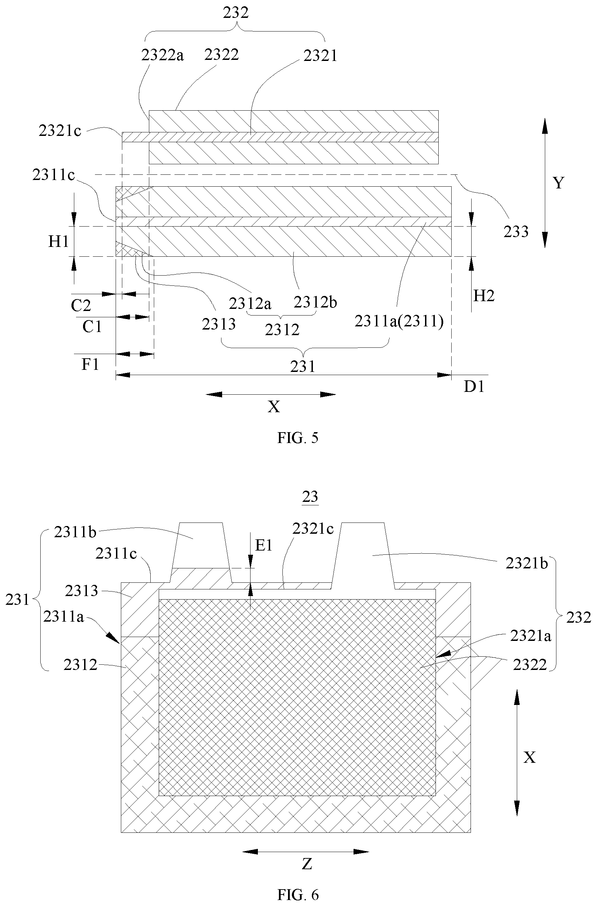

Referring to FIG. 3 together with FIG. 4 and FIG. 5, FIG. 4 is a schematic structural diagram of an electrode assembly according to some embodiments of this application, and FIG. 5 is a cross-sectional view of sectioning along an A-A line shown in FIG. 4. This application provides a battery cell 20. The battery cell 20 includes an electrode assembly 23. The electrode assembly 23 includes a negative electrode plate 231 and a positive electrode plate 232. The negative electrode plate 231 includes a negative current collector 2311 and a negative active material layer 2312. The negative current collector 2311 includes a negative electrode body 2311a and a negative tab 2311b. The negative tab 2311b protrudes from the negative electrode body 2311a. At least a part of the negative active material layer 2312 is disposed on a surface of the negative electrode body 2311a. The positive electrode plate 232 includes a positive current collector 2321 and a positive active material layer 2322. The positive current collector 2321 includes a positive electrode body 2321a and a positive tab 2321b. The positive tab 2321b extends out from a first edge 2321c of the positive electrode body 2321a along a first direction X. The positive active material layer 2322 is disposed on a surface of the positive electrode body 2321a. Along a thickness direction of the negative electrode body 2311a, a projection of the positive active material layer 2322 on the negative electrode plate 231 falls into the negative active material layer 2312. The negative electrode plate 231 further includes a first insulation layer 2313. The first insulation layer 2313 is disposed on the negative current collector 2311. Along the thickness direction Y of the negative electrode body 2311a, a projection of the first edge 2321c on the negative electrode plate 231 falls into the first insulation layer 2313.

In the drawing, the direction indicated by the letter X is the first direction X. The first direction X is perpendicular to the thickness direction of the positive electrode body 2321a. The first direction X may be a width direction of the positive electrode plate 232, or the first direction X may be the length direction of the positive electrode plate 232. The direction indicated by the letter Y is the thickness direction of the negative electrode body 2311a. The thickness direction Y of the negative electrode body 2311a is also the thickness direction of the negative current collector 2311. The thickness direction Y of the negative electrode body 2311a, the thickness direction of the negative active material layer 2312, the thickness direction of the positive electrode body 2321a, and the thickness direction of the positive active material layer 2322 are parallel to each other.

It is hereby noted that the negative electrode plate 231 and the positive electrode plate 232 in FIG. 4 and FIG. 5 are schematic diagrams of the electrode plates in an unwound state.

The electrode assembly 23 further includes a separator 233. The separator 233 is disposed between the positive electrode plate 232 and the negative electrode plate 231, and is configured to dielectrically isolate the positive electrode plate 232 from the negative electrode plate 231.

That at least a part of the negative active material layer 2312 is disposed on a surface of the negative electrode body 2311a means: (i) a part of the negative active material layer 2312 is disposed on a surface of the negative electrode body 2311a, and another part of the negative active material layer 2312 is disposed on a part of a surface of the negative tab 2311b; or (ii) all the negative active material layer 2312 is disposed on a surface of the negative electrode body 2311a.

The negative active material layer 2312 may be disposed on one surface of the negative electrode body 2311a in the thickness direction Y, or the negative active material layer 2312 may be disposed on two opposite surfaces of the negative electrode body 2311a in the thickness direction Y respectively.

Generally, the negative electrode body 2311a is a part of the negative current collector 2311, the part being coated with the negative active material layer 2312. The negative tab 2322b is cut out of a part of the negative current collector 2311, the part being coated with no negative active material layer 2312. However, in some embodiments, the negative active material layer 2312 may extend to the negative tab 2311b. In this case, the negative active material layer 2312 exists at an edge of the negative current collector 2311, the edge being a part from which the negative tab 2311b is cut out. In other words, the negative active material layer 2312 and the negative current collector 2311 are cut in such a way that the negative active material layer 2312 is disposed on a part of the negative tab 2311b.

That the negative tab 2311b protrudes from the negative electrode body 2311a means that the negative tab 2311b protrudes from the edge of the negative electrode body 2311a in a direction perpendicular to the thickness direction Y of the negative electrode body 2311a, where the edge of the negative electrode body 2311a is a part from which the negative tab 2311b is cut out.

That the positive tab 2321b extends out from a first edge 2321c of the positive electrode body 2321a along the first direction X may mean that the positive tab 2321b is cut out from a blank foil region of the positive current collector 2321, where the blank foil region is a region coated with no positive active material layer 2322. In other words, the first edge 2321c is an edge of the positive electrode body 2321a and is formed by cutting out the positive tab 2321b from the positive electrode body.

The positive active material layer 2322 may be disposed on one surface of the positive electrode body 2321a in the thickness direction, or the positive active material layer 2322 may be disposed on two opposite surfaces of the positive electrode body 2321a in the thickness direction respectively.

The positive electrode body 2321a is a part of the positive current collector 2321, the part being coated with the positive active material layer 2322. The positive tab 2321b is cut out of a part of the positive current collector 2321, the part being coated with no positive active material layer 2322.

That a projection of the positive active material layer 2322 on the negative electrode plate 231 falls into the negative active material layer 2312 along the thickness direction Y of the negative electrode body 2311a means that, in a plane perpendicular to the thickness direction Y of the negative electrode body 2311a, the projection of the positive active material layer 2322 falls into the negative active material layer 2312. The area of the negative active material layer 2312 is larger than the area of the positive active material layer 2322, thereby reducing the risk of lithium plating.

The first insulation layer 2313 is a component serving an insulating function. That the first insulation layer 2313 is disposed on the negative current collector 2311 may mean that the first insulation layer 2313 is applied onto a surface of the negative current collector 2311. For example, the first insulation layer 2313 is applied onto a surface of the negative electrode body 2311a; or, the first insulation layer 2313 is applied onto a surface of the negative electrode body 2311a and a surface of the negative active material layer 2312; or, the first insulation layer 2313 is applied onto a surface of the negative active material layer 2312 and a surface of the negative tab 2311b.

Along the thickness direction Y of the negative electrode body 2311a, the projection of the first edge 2321c on the negative electrode plate 231 falls into the first insulation layer 2313. In a case that the burrs at the first edge 2321c pierce the separator 233, the first insulation layer 2313 can obstruct the burrs from contacting the negative current collector 2311 or the negative active material layer 2312.

To reduce the risk of lithium plating, as shown in FIG. 4, in a second direction Z, both ends of the negative active material layer 2312 exceed the positive active material layer 2322. The second direction Z, the first direction X, and the thickness direction Y of the negative electrode body 2311a are perpendicular to each other.

In the battery cell 20 according to an embodiment of this application, the first insulation layer 2313 is disposed on the negative current collector 2311. The projection of the first edge 2321c on the negative electrode plate 231 falls into the first insulation layer 2313, so as to enhance the effect of insulation between the negative electrode plate 231 and an edge of the positive electrode body 2321a, where the edge is formed when cutting out a positive tab 2321b from the positive electrode body. This reduces the risk that the burrs on the first edge 2321c pierce the separator 233 to cause direct contact and a short circuit between the positive electrode plate and the negative current collector 2311 or the negative active material layer 2312, and improves the safety of the battery cell 20.

According to some embodiments of this application, as shown in FIG. 4 and FIG. 5, the negative electrode body 2311a includes a second edge 2311c close to the first edge 2321c. The second edge 2311c exceeds the first edge 2321c along the first direction X.

The second edge 2311c is an edge of the negative electrode body 2311a along the first direction X. The second edge 2311c is closer to the first edge 2321c than other edges of the negative electrode body 2311a along the first direction X. The negative tab 2311b may extend out from the second edge 2311c; or the negative tab 2311b may extend out from an edge of the negative electrode body 2311a, the edge being opposite to the second edge 2311c; or the negative tab 2311b may extend out from an edge of the negative electrode body 2311a, the edge being adjacent to the second edge 2311c.

That the second edge 2311c exceeds the first edge 2321c along the first direction X means that the negative electrode body 2311a exceeds the positive electrode body 2321a.

The first insulation layer 2313 may extend to the second edge 2311c. The first edge 2321c may be disposed close to the second edge 2311c, so that the positive electrode body 2321a is allowed to be large in dimension in the first direction X, thereby enabling a relatively high capacity of the positive active material layer 2322 and endowing the battery cell 20 with a relatively high energy density.

In the above technical solution, because the negative active material layer 2312 exceeds the positive active material layer 2322 and the second edge 2311c exceeds the first edge 2321c, the negative active material layer 2312 is allowed to be large in dimension in the first direction X, and the positive active material layer 2322 is allowed to be large in dimension in the first direction X, thereby enabling a relatively high capacity of the negative active material layer 2312 and the positive active material layer 2322, and achieving a relatively high energy density of the battery cell 20.

According to some embodiments of this application, as shown in FIG. 4 and FIG. 5, the first insulation layer 2313 covers a part of the negative active material layer 2312.

That the first insulation layer 2313 covers a part of the negative active material layer 2312 means that the first insulation layer 2313 covers the negative active material layer 2312 in the following two scenarios: (i) a part of the first insulation layer 2313 covers the negative active material layer 2312, and another part of the first insulation layer 2313 covers the negative electrode body 2311a; or (ii) the entire first insulation layer 2313 covers the negative active material layer 2312.

In the above technical solution, the first insulation layer 2313 covers a part of the negative active material layer 2312, so that the negative active material layer 2312 can be disposed in a relatively large area on the negative electrode body 2311a. Therefore, the capacity of the negative active material layer 2312 is relatively large, and the capacity of the positive active material layer 2322 can also be made relatively large.

According to some embodiments of this application, the negative active material layer 2312 extends to the second edge 2311c.

The negative active material layer 2312 extends to the second edge 2311c, so that the negative active material layer 2312 occupies a relatively large area on the negative electrode body 2311a, thereby making the capacity of the negative active material layer 2312 be relatively large.

Referring to FIG. 6, FIG. 6 is a schematic structural diagram of an electrode assembly according to some other embodiments of this application. According to some embodiments of this application, the negative tab 2311b extends out from the second edge 2311c. Along the first direction X from the negative electrode body 2311a to the negative tab 2311b, the first insulation layer 2313 exceeds the second edge 2311c and covers a part of the negative tab 2311b.

The negative tab 2311b extends out from the second edge 2311c. The second edge 2311c may be an edge, from which the negative tab 2311b is cut out, of the negative current collector 2311.

In an embodiment in which the negative active material layer 2312 extends to the second edge 2311c, the negative tab 2311b may be formed by cutting the negative active material layer 2312 and the negative current collector 2311.

The first insulation layer 2313 exceeds the second edge 2311c and covers a part of the negative electrode plate 231. The first insulation layer 2313 extends to the negative tab 2311b, thereby reducing the risk of contact and a short circuit between the negative tab 2311b and the positive current collector 2321 during bending of the negative tab 2311b.

In the above technical solution, the first insulation layer 2313 exceeds the second edge 2311c and covers a part of the negative tab 2311b. The first insulation layer 2313 covers a relatively large area on the negative current collector 2311, thereby reducing the risk of contact and a short circuit between the positive electrode plate 232 and the negative electrode plate 231.

According to some embodiments of this application, as shown in FIG. 6, along the first direction X, an overlay dimension by which the first insulation layer 2313 covers the negative tab 2311b is E1, satisfying: 0 < E1 ≤ 8 mm, and preferably 1 mm ≤ E1 ≤ 3 mm.

The overlay dimension by which the first insulation layer 2313 covers the negative tab 2311b along the first direction X, denoted as E1, means an overlay dimension by which the first insulation layer 2313 covers the negative tab 2311b in the first direction X when the negative electrode plate 231 is in an unwound state.

When the overlay dimension E1 by which the first insulation layer 2313 covers the negative tab 2311b along the first direction X falls within the above range, this technical solution avoids interference with the connection between the negative tab 2311b and other components (such as an adapter piece) while producing a good insulation effect. If the overlay dimension by which the first insulation layer 2313 covers the negative tab 2311b is relatively small (or if the first insulation layer does not cover the negative tab 2311b), the negative tab 2311b is prone to contact and short-circuit with the positive electrode plate 232. If the overlay dimension by which the first insulation layer 2313 covers the negative tab 2311b is relatively large (for example, greater than 8 mm), the first insulation layer occupies a relatively large dimension of the negative tab 2311b in the first direction X, thereby interfering with the connection between the negative tab 2311b and other components.

In contrast to the overlay dimension range 0 < E1 ≤ 8 mm, when the overlay dimension falls within the range of 1 mm ≤ E1 ≤ 3 mm, the first insulation layer 2313 produces a good insulation effect on the negative tab 2311b, and occupies a relatively small dimension of the negative tab 2311b in the first direction X.

Optionally, E1 may be 0.5 mm, 1 mm, 1.2 mm, 1.5 mm, 2 mm, 2.5 mm, 3 mm, 4 mm, 4.5 mm, 5 mm, 6 mm, 7 mm, 8 mm, or the like.

According to some embodiments of this application, as shown in FIG. 5, along the first direction X, an overlay dimension by which the first insulation layer 2313 covers the negative electrode body 2311a is F1, satisfying: 3 mm ≤ F1 ≤ 10 mm.

The overlay dimension by which the first insulation layer 2313 covers the negative electrode body 2311a along the first direction X, denoted as F1, means the dimension of a projection of the first insulation layer 2313 on the negative electrode body 2311a in the first direction X, where the projection is projected along the thickness direction Y of the negative electrode body 2311a. In other words, when the first insulation layer 2313 covers only the negative electrode body 2311a, F1 may be the dimension by which the first insulation layer 2313 covers the negative electrode body 2311a in the first direction X; or, when the second insulation layer 2323 covers a part of the negative electrode body 2311a and a part of the negative active material layer 2312, F1 may be the dimension by which the second insulation layer 2323 covers the negative electrode body 2311a and the negative active material layer 2312 in the first direction X; or, when the first insulation layer 2313 covers only the negative active material layer 2312, F1 may be the dimension by which the first insulation layer 2313 covers the negative active material layer 2312 in the first direction X.

In the above technical solution, the overlay dimension F1 by which the first insulation layer 2313 covers the negative electrode body 2311a along the first direction X falls within the above range, thereby being able to constrain the position of the first edge 2321c of the positive electrode body 2321a. This creates a relatively large dimension of the positive electrode body 2321a in the first direction X and a relatively large dimension of the positive active material layer 2322 while achieving a relatively good insulation effect, thereby achieving a relatively high capacity of the positive active material layer 2322, and in turn, a relatively high energy density of the battery cell 20. If F1 is relatively small (such as less than 3 mm), the coverage area of the first insulation layer 2313 on the negative electrode body 2311a is relatively small, and the insulation effect of the first insulation layer 2313 is relatively low, thereby being prone to cause contact and a short circuit between the positive electrode plate 232 and the negative electrode plate 231. If F1 is relatively large (for example, greater than 10 mm), the dimension of the first insulation layer 2313 is relatively large, thereby resulting in a waste of materials and high cost.

Optionally, 5 mm ≤ F1 ≤ 8 mm.

Optionally, F1 may be 3 mm, 4 mm, 5 mm, 6 mm, 7 mm, 8 mm, 9 mm, or 10 mm.

According to some embodiments of this application, as shown in FIG. 5, the negative active material layer 2312 includes a thinned region 2312a and a main region 2312b. The thinned region 2312a and the main region 2312b are arranged along the first direction X. A thickness of the thinned region 2312a is less than a thickness of the main region 2312b. The first insulation layer 2313 covers the thinned region 2312a.

The thinned region 2312a and the main region 2312b are two regions of the negative active material layer 2312. The thinned region 2312a may be a relatively thin region of the negative active material layer 2312. The thickness of the thinned region 2312a may gradually change along the first direction X. For example, along the first direction X from the positive tab 2321b to the positive electrode body 2321a, the thickness of the thinned region 2312a may increase gradually. The main region 2312b may be a thickest region of the negative active material layer 2312. The thickness of the main region 2312b is equal at all positions.

In the above technical solution, the first insulation layer 2313 covers the thinned region 2312a so that the total thickness of the negative active material layer 2312 and the first insulation layer 2313 covering the negative active material layer is relatively small, thereby reducing the risk of lithium plating.

According to some embodiments of this application, as shown in FIG. 5, along the thickness direction Y of the negative electrode body 2311a, a sum of thicknesses of the first insulation layer 2313 and the thinned region 2312a is H1, and the thickness of the main region 2312b is H2, satisfying: -2 mm ≤ H1 - H2 ≤ 2 mm.

The sum of the thicknesses of the first insulation layer 2313 and the thinned region 2312a along the thickness direction Y of the negative electrode body 2311a means a distance, at any position in the first direction X, between a surface, away from the negative electrode body 2311a, of the first insulation layer 2313 and the negative electrode body 2311a along the thickness direction Y of the negative electrode body 2311a.

Optionally, H1-H2 may be -2 mm, -1 mm, 0, 1 mm, 2 mm, or the like.

In the above technical solution, the sum H1 of the thicknesses of the first insulation layer 2313 and the thinned region 2312a as well as the thickness H2 of the main region 2312b satisfy the above relationship, so that the distance between the negative electrode plate 231 and the positive electrode plate 232 is relatively short, thereby facilitating movement of metal ions and reducing the risk of lithium plating. If the sum H1 of the thicknesses of the first insulation layer 2313 and the thinned region 2312a is unduly small (H1 - H2 < -2 mm), then the surface, away from the negative electrode body 2311a, of the first insulation layer 2313 is closer to the negative electrode body 2311a than the surface, away from the negative electrode body 2311a, of the main region 2312b along the thickness direction Y of the negative electrode body 2311a. The distance between the surface, away from the negative electrode body 2311a, of the first insulation layer 2313 and the surface, away from the negative electrode body 2311a, of the main region 2312b is relatively large. At the thinned region 2312a, the thickness of the negative active material layer 2312 is relatively small, and the capacity of the negative active material layer 2312 is relatively low. If the sum H1 of the thicknesses of the first insulation layer 2313 and the thinned region 2312a is unduly large (H1 - H2 > 2 mm), then the surface of the first insulation layer 2313 protrudes beyond the surface of the main region 2312b, thereby increasing the distance between the main region 2312b and the positive electrode plate 232 and being prone to lithium plating.

According to some embodiments of this application, as shown in FIG. 5, the positive active material layer 2322 includes a third edge 2322a close to the first edge 2321c. Along the first direction X from the positive electrode body 2321a to the positive tab 2321b, an excess dimension by which the negative active material layer 2312 exceeds the third edge 2322a is C1, satisfying: 0.5 mm ≤ C1 ≤ 3 mm, and preferably 1 mm ≤ C1 ≤ 2 mm.

The third edge 2322a is an edge of the positive active material layer 2322 along the first direction X. The third edge 2322a is closer to the first edge 2321c than other edges of the positive active material layer 2322 along the first direction X.

In the above technical solution, the excess dimension C1 by which the negative active material layer 2312 exceeds the third edge 2322a falls within the above range, thereby making it convenient to control the excess dimension by which the negative active material layer 2312 exceeds the positive active material layer 2322, and reducing the risk of lithium plating. If the excess dimension by which the negative active material layer 2312 exceeds the third edge 2322a is unduly small (for example, less than 0.5 mm), lithium plating is prone to occur. If the excess dimension by which the negative active material layer 2312 exceeds the third edge 2322a is unduly large (for example, greater than 3 mm), the capacity of the positive active material layer 2322 is relatively low, thereby impairing the energy density of the battery cell 20.

In contrast to the excess dimension range 0.5 mm ≤ C1 ≤ 3 mm, when the excess dimension falls within the range of 1 mm ≤ C1 ≤ 2 mm, the capacity of the positive active material layer 2322 is relatively high, and lithium plating is not prone to occur.

Optionally, C1 may be 0.5 mm, 1 mm, 1.5 mm, 2 mm, 2.5 mm, 3 mm, or the like.

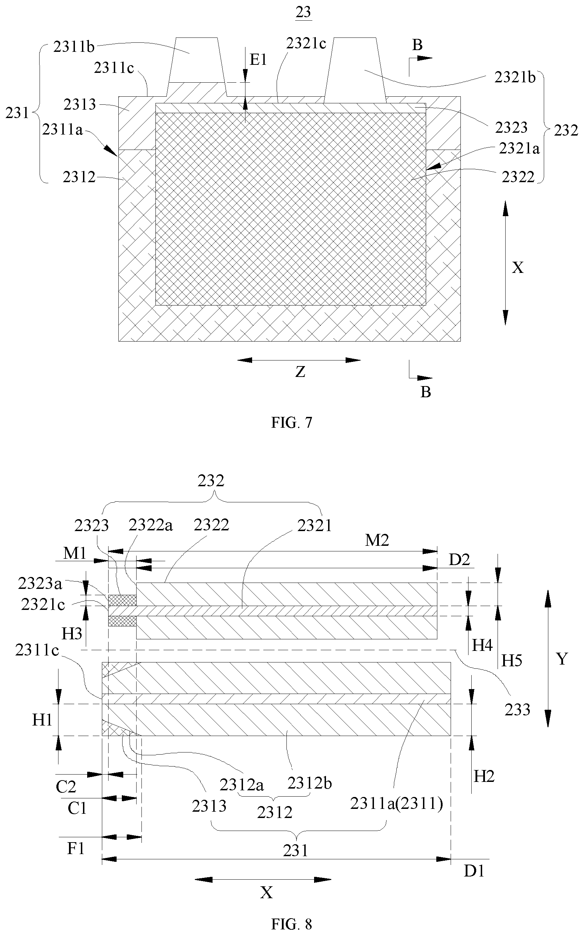

Referring to FIG. 7 and FIG. 8, FIG. 7 is a schematic structural diagram of an electrode assembly according to still some other embodiments of this application, and FIG. 8 is a cross-sectional view of sectioning along a B-B line shown in FIG. 7. According to some embodiments of this application, the positive electrode plate 232 further includes a second insulation layer 2323. The second insulation layer 2323 is disposed on the positive current collector 2321, and the second insulation layer 2323 extends to the first edge 2321c.

That the second insulation layer 2323 extends to the first edge 2321c means that the second insulation layer 2323 is disposed at a position close to the first edge 2321c on the positive electrode body 2321a.

In the above technical solution, the second insulation layer 2323 extends to the first edge 2321c. The second insulation layer 2323 can wrap the burrs on the first edge 2321c, thereby making it more difficult for the burrs to pierce the separator 233, and reducing the risk of contact and a short circuit between the positive electrode plate 232 and the negative electrode plate 231.

According to some embodiments of this application, as shown in FIG. 7 and FIG. 8, the second insulation layer 2323 and the positive active material layer 2322 are arranged along the first direction X.

With the second insulation layer 2323 and the positive active material layer 2322 arranged along the first direction X, the second insulation layer 2323 is disposed in the blank foil region of the positive electrode body 2321a. Along the first direction X, a clearance may exist between the second insulation layer 2323 and the positive active material layer 2322, or the second insulation layer 2323 may be in contact with the positive active material layer 2322.

In the above technical solution, the second insulation layer 2323 and the positive active material layer 2322 are arranged along the first direction X, thereby facilitating the assembling of the second insulation layer 2323 and the positive current collector 2321, preventing the second insulation layer 2323 from covering the positive active material layer 2322 so as to avoid an increase in the distance between the positive active material layer 2322 and the negative electrode plate 231, and reducing the risk of lithium plating.

In some embodiments, the second insulation layer 2323 may cover the positive active material layer 2322. In other words, a part of the second insulation layer 2323 covers the positive electrode body 2321a, and another part of the second insulation layer 2323 covers the positive active material layer 2322. A region, covered by the second insulation layer 2323, of the positive active material layer 2322 may be thinned to reduce the total thickness of the positive active material layer 2322 and the second insulation layer 2323 that covers the positive active material layer.

According to some embodiments of this application, as shown in FIG. 8, along the first direction X, an overlay dimension by which the second insulation layer 2323 covers the positive electrode body 2321a is M1, and the dimension of the positive electrode body 2321a is M2, satisfying: 0.2% ≤ M1/M2 ≤ 2.8%, and preferably 0.4% ≤ M1/M2 ≤ 2%.

The overlay dimension by which the second insulation layer 2323 covers the positive electrode body 2321a along the first direction X, denoted as M1, means the dimension of a projection of the second insulation layer 2323 on the positive electrode body 2321a in the first direction X, where the projection is projected along the thickness direction (that is, direction Y) of the positive electrode body 2321a. In other words, when the second insulation layer 2323 covers only the positive electrode body 2321a, M1 may be the dimension by which the second insulation layer 2323 covers the positive electrode body 2321a in the first direction X; or, when the second insulation layer 2323 covers a part of the positive electrode body 2321a and a part of the positive active material layer 2322, M1 may be the dimension by which the second insulation layer 2323 covers the positive electrode body 2321a and the positive active material layer 2322 in the first direction X.

In the above technical solution, along the first direction X, the ratio of the overlay dimension M1 of the second insulation layer 2323 on the positive electrode body 2321a to the dimension M2 of the positive electrode body 2321a falls within the above range. In this way, the second insulation layer 2323 produces a good insulation effect, the dimension occupied by the second insulation layer 2323 in the first direction X is relatively small, and the capacity of the positive active material layer 2322 can be relatively high. If the M1/M2 ratio is unduly small (for example, less than 0.2%), the overlay dimension by which the second insulation layer 2323 covers the positive electrode body 2321a in the first direction X is relatively small, and the insulation effect is relatively low. If the M1/M2 ratio is unduly large (for example, greater than 2.8%), the overlay dimension by which the second insulation layer 2323 covers the positive electrode body 2321a in the first direction X is relatively large, and the dimension of the positive active material layer 2322 in the first direction X is relatively small, thereby impairing the energy density of the battery cell 20.

In contrast to the range 0.2% ≤ M1/M2 ≤ 2.8%, when the ratio falls within the range of 0.4% ≤ M1/M2 ≤ 2%, the second insulation layer 2323 produces a good insulation effect, without much impairing the energy density of the battery cell 20.

Optionally, the M1/M2 ratio may be 0.2%, 0.4%, 0.5%, 0.51%, 0.52%, 0.6%, 0.8%, 1%, 1.2%, 1.4%, 1.5%, 1.51%, 1.52%, 1.6%, 1.78%, 1.79%, 1.8%, 2%, 2.2%, 2.4%, 2.6%, 2.8%, or the like.

According to some embodiments of this application, as shown in FIG. 7 and FIG. 8, along the thickness direction Y of the negative electrode body 2311a, a projection of the second insulation layer 2323 on the negative electrode plate 231 falls into the first insulation layer 2313.

Along the thickness direction Y of the negative electrode body 2311a, the projection of the second insulation layer 2323 on the negative electrode plate 231 falls into the first insulation layer 2313. Therefore, the overlap area between the second insulation layer 2323 and the first insulation layer 2313 is relatively large, and the first insulation layer 2313 produces a good insulation effect. At the same time, the dimension of the second insulation layer 2323 in the first direction X is relatively small, so that the capacity of the positive active material layer 2322 is relatively high, thereby endowing the battery cell 20 with a relatively high energy density.

According to some embodiments of this application, as shown in FIG. 7 and FIG. 8, along the first direction X from the positive tab 2321b to the positive electrode body 2321a, the first insulation layer 2313 exceeds the second insulation layer 2323.

In the above technical solution, the first insulation layer 2313 exceeds the second insulation layer 2323, the dimension of the second insulation layer 2323 in the first direction X is relatively small, and the dimension of the positive active material layer 2322 in the first direction X is relatively large, so that the capacity of the positive active material layer 2322 is relatively high.

According to some embodiments of this application, as shown in FIG. 8, along the first direction X, the dimension of the negative active material layer 2312 is D1, the dimension of the positive active material layer 2322 is D2, and the dimension of the second insulation layer 2323 is M1, satisfying: M1 ≤ (D1 - D2)/2.

When the negative active material layer 2312 exceeds the positive active material layer 2322 by the same amount at both ends in the first direction X, the excess dimension by which the negative active material layer 2312 exceeds the positive active material layer 2322 is (D1-D2)/2 at either end in the first direction X.

In the above technical solution, along the first direction X, the dimension of the second insulation layer 2323, the dimension of the negative active material layer 2312, and the dimension of the positive active material layer 2322 satisfy the above relationships. The dimension of the second insulation layer 2323 is relatively small, and the second insulation layer 2323 occupies a relatively small space in the first direction X. The dimension of the positive active material layer 2322 in the first direction X can be relatively large, thereby endowing the battery cell 20 with a relatively high energy density. If M1 > (D1-D2)/2, the dimension of the second insulation layer 2323 in the first direction X is relatively large, and the dimension of the positive active material layer 2322 in the first direction X is relatively small, thereby impairing the energy density of the battery cell 20.

According to some embodiments of this application, as shown in FIG. 8, the second insulation layer 2323 includes a fourth edge 2323a close to the first edge 2321c. Along the first direction X from the positive electrode body 2321a to the positive tab 2321b, an excess dimension by which the first insulation layer 2313 exceeds the fourth edge 2323a is C2, satisfying: 0 < C2 ≤ 2.5 mm.

The fourth edge 2323a is an edge of the second insulation layer 2323 in the first direction X, and the fourth edge 2323a is close to the first edge 2321c.

The excess dimension by which the first insulation layer 2313 exceeds the fourth edge 2323a may be a distance from an end, away from the second insulation layer 2323, of the first edge 2321c to the fourth edge 2323a along the first direction X.

In the above technical solution, the excess dimension by which the first insulation layer 2313 exceeds the fourth edge 2323a satisfies the above relationship, so as to control the dimension of the first insulation layer 2313 in the first direction X, achieve a good insulation effect between the positive electrode plate 232 and the negative electrode plate 231, and endow the battery cell 20 with relatively high safety. If C2 is unduly large (for example, greater than 2.5 mm), the dimension of the first insulation layer 2313 in the first direction X is relatively large, and the dimension of the positive active material layer 2322 in the first direction X is relatively small, thereby impairing the energy density of the battery cell 20.

Optionally, 0.5 mm ≤ C2 ≤ 1.5 mm.

Optionally, C2 may be 0.5 mm, 0.75 mm, 1 mm, 1.5 mm, 2 mm, 2.5 mm, or the like.

According to some embodiments of this application, as shown in FIG. 8, along the first direction X, the overlay dimension by which the second insulation layer 2323 covers the positive electrode body 2321a is M1, satisfying: 0.3 mm ≤ M1 ≤ 1.5 mm, and preferably 0.5 mm ≤ M1 ≤ 1 mm.

In the above technical solution, the overlay dimension by which the second insulation layer 2323 covers the positive electrode body 2321a satisfies the above relationship. Therefore, the second insulation layer 2323 produces a good insulation effect, and moreover, the space occupied by the second insulation layer 2323 in the first direction X is relatively small. If the overlay dimension by which the second insulation layer 2323 covers the positive electrode body 2321a is unduly small (for example, less than 0.3 mm), the insulation effect of the second insulation layer 2323 is relatively low. If the overlay dimension by which the second insulation layer 2323 covers the positive electrode body 2321a is unduly large (for example, greater than 1.5 mm), then the space occupied by the second insulation layer 2323 in the first direction X is relatively large, the dimension of the positive active material layer 2322 in the first direction X is relatively small, and the capacity of the positive active material layer 2322 is relatively low, thereby impairing the energy density of the battery cell 20.

In contrast to the range 0.3 mm ≤ M1 ≤ 1.5 mm, when the overlay dimension falls within the range of 0.5 mm ≤ M1 ≤ 1 mm, the second insulation layer 2323 produces a good insulation effect. In addition, the overlay dimension by which the second insulation layer 2323 covers the positive electrode body 2321a in the first direction X is relatively small, thereby causing little impact onto the energy density of the battery cell 20.

Optionally, M1 may be 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, or 1.5 mm.

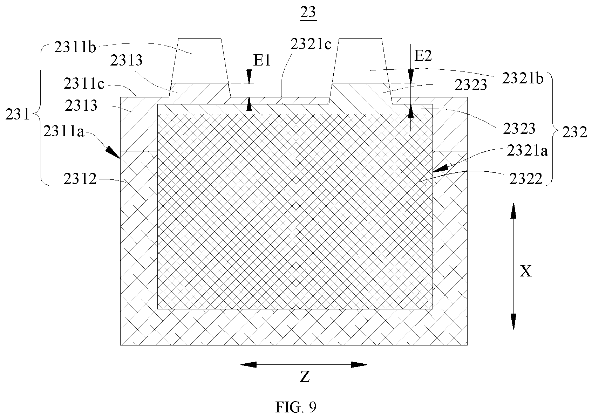

Referring to FIG. 9, FIG. 9 is a schematic structural diagram of an electrode assembly according to still some other embodiments of this application. According to some embodiments of this application, as shown in FIG. 9, along the first direction X from the positive electrode body 2321a to the positive tab 2321b, the second insulation layer 2323 exceeds the first edge 2321c and covers a part of the positive tab 2321b.

In the above technical solution, the second insulation layer 2323 exceeds the first edge 2321c and covers a part of the positive tab 2321b. The second insulation layer 2323 covers a relatively large area on the positive current collector 2321, thereby reducing the risk of contact and a short circuit between the positive electrode plate 232 and the negative electrode plate 231.

According to some embodiments of this application, as shown in FIG. 9, the overlay dimension by which the second insulation layer 2323 covers the positive tab 2321b is E2, satisfying: 0 < E2 ≤ 8 mm, and preferably 1 mm ≤ E2 ≤ 3 mm.

In the above technical solution, the overlay dimension by which the second insulation layer 2323 covers the positive tab 2321b falls within the above range, thereby avoiding interference with the connection between the positive tab 2321b and other components (such as an adapter piece) while producing a good insulation effect. If the overlay dimension by which the second insulation layer 2323 covers the positive tab 2321b is unduly small (or the second insulation layer 2323 does not cover the positive tab 2321b), the insulation effect is relatively weak, and the safety of the battery cell 20 is impaired. If the overlay dimension by which the second insulation layer 2323 covers the positive tab 2321b is unduly large (for example, greater than 8 mm), the second insulation layer occupies a relatively large dimension of the positive tab 2321b in the first direction X, thereby interfering with the connection between the positive tab 2321b and other components.

In contrast to the overlay dimension range 0 < E2 ≤ 8 mm, when the overlay dimension falls within the range of 1 mm ≤ E2 ≤ 3 mm, the second insulation layer 2323 produces a good insulation effect on the positive tab 2321b, and occupies a relatively small dimension of the positive tab 2321b in the first direction X.

Optionally, E2 may be 0.5 mm, 1 mm, 1.2 mm, 1.5 mm, 2 mm, 2.5 mm, 3 mm, 4 mm, 4.5 mm, 5 mm, 6 mm, 7 mm, 8 mm, or the like.

According to some embodiments of this application, as shown in FIG. 8, the thickness of the second insulation layer 2323 is H3, the thickness of the positive current collector 2321 is H4, and the thickness of the positive active material layer 2322 is H5, satisfying: H3 > H4, and H3 ≤ H5.

In the above technical solution, the thickness of the second insulation layer 2323 is greater than the thickness of the positive electrode collector 2321, thereby effectively wrapping the burrs generated in a process of cutting out the positive tab 2321b, and making it more difficult for the burrs to pierce the second insulation layer 2323. The thickness of the second insulation layer 2323 is less than or equal to the thickness of the positive active material layer 2322, so that the second insulation layer 2323 occupies just a relatively small space in the thickness direction of the positive current collector 2321, thereby reducing the risk of lithium plating.

According to some embodiments of this application, the second insulation layer 2323 includes a ceramic layer or a macromolecular polymer layer.

In the above technical solution, when the second insulation layer 2323 includes a ceramic layer, the particles of the ceramic material of the ceramic layer are relatively large, and metal ions can pass through the ceramic layer, thereby facilitating movement of the metal ions. When the second insulation layer 2323 includes a macromolecular polymer layer, the second insulation layer 2323 produces a good insulation effect, thereby reducing the risk of contact and a short circuit between the positive electrode plate 232 and the negative electrode plate 231.

According to some embodiments of this application, in the second insulation layer 2323, the ceramic layer includes a water-based ceramic slurry or an oil-based ceramic slurry. When the ceramic layer includes a water-based ceramic slurry, the content of the ceramic material is relatively high, thereby facilitating the migration of metal ions and the storage of an electrolyte solution. When the ceramic layer includes an oil-based ceramic slurry, the ceramic layer produces a good insulation effect.

In the second insulation layer 2323, in an embodiment in which the ceramic layer includes a water-based ceramic slurry, the water-based ceramic slurry uses water as a solvent and includes a solid content of 20% to 85%, preferably 40% to 75%. The water-based ceramic slurry includes a ceramic material, adhesive, a thickener, a dispersant, and a defoamer. The content of the ceramic material is 20% to 80% based on the total solid content.

In the second insulation layer 2323, in an embodiment in which the ceramic layer includes an oil-based ceramic slurry, the oil-based ceramic slurry uses N-methylpyrrolidone as a solvent and includes a solid content of 10% to 60%, preferably 20% to 50%. The oil-based ceramic slurry includes a ceramic material and a binder. The content of the ceramic material is 1/10 to 10 times the content of the binder.

In an embodiment in which the second insulation layer 2323 includes a macromolecular polymer layer, the macromolecular polymer layer may include at least one of polyvinylidene difluoride, polypropylene, polyamide, epoxy resin, or the like.

According to some embodiments of this application, the first insulation layer 2313 includes a ceramic layer.

In the above technical solution, when the first insulation layer 2313 includes a ceramic layer, the particles of the ceramic material of the ceramic layer are relatively large, and metal ions can pass through the ceramic layer, thereby facilitating movement of the metal ions, without affecting the activity of the active material.

According to some embodiments of this application, in the first insulation layer 2313, the ceramic layer includes a water-based ceramic slurry or an oil-based ceramic slurry. When the ceramic layer includes a water-based ceramic slurry, the content of the ceramic material is relatively high, thereby facilitating the migration of metal ions and the storage of an electrolyte solution. When the ceramic layer includes an oil-based ceramic slurry, the ceramic layer produces a good insulation effect.

In the first insulation layer 2313, in an embodiment in which the ceramic layer includes a water-based ceramic slurry, the water-based ceramic slurry uses water as a solvent and includes a solid content of 20% to 70%, preferably 35% to 45%. The water-based ceramic slurry includes a ceramic material, adhesive, a thickener, a dispersant, and a defoamer. The content of the ceramic material is 85% to 95% based on the total solid content.

In the first insulation layer 2313, in an embodiment in which the ceramic layer includes an oil-based ceramic slurry, the oil-based ceramic slurry uses N-methylpyrrolidone as a solvent and includes a solid content of 10% to 30%, preferably 10% to 20%. The oil-based ceramic slurry includes a ceramic material and a binder. The content of the ceramic material is 5 to 10, preferably 6 to 8, times the content of the binder.

In the above embodiment, the constituents of the water-based ceramic slurry in the first insulation layer 2313 may be the same as the constituents of the water-based ceramic slurry in the second insulation layer 2323.

Optionally, the ceramic material may be one of hydrated aluminum oxide, magnesium oxide, silicon carbide, or silicon nitride.

Optionally, the binder may be at least one of polyacrylate ester, methyl acrylate, ethyl acrylate, 2-methyl methacrylate, or 2-ethyl methacrylate.

Optionally, the thickener may be one of sodium carboxymethylcellulose, carboxymethylcellulose, methylcellulose, or sodium polyacrylate.

Optionally, the dispersant may be at least one of polyacrylamide, polyvinyl alcohol, or polyvinyl pyrrolidone.

Optionally, the defoamer may be one of n-butanol or ethanol.

In the above embodiment, the constituents of the oil-based ceramic slurry in the first insulation layer 2313 may be the same as the constituents of the oil-based ceramic slurry in the second insulation layer 2323.

Optionally, in the oil-based ceramic slurry, the ceramic material may be one of hydrated aluminum oxide, magnesium oxide, silicon carbide, or silicon nitride. The binder may be one of polyvinylidene difluoride or polyacrylonitrile.

According to some embodiments of this application, this application further provides a battery 100. The battery 100 includes a box 10 and a plurality of battery cells 20 disclosed in any one of the above embodiments. The plurality of battery cells 20 are disposed in the box 10.

According to some embodiments of this application, this application further provides an electrical device. The electrical device includes the battery cell 20 disclosed in any one of the above embodiments. The battery cell 20 is configured to provide electrical energy.

The electrical device is any device or system in which the battery cell 20 is applied.

According to some embodiments of this application, referring to FIG. 3 to FIG. 9, this application provides a battery cell 20. The battery cell 20 includes a housing 21, an end cap 22, an electrode assembly 23, and an adapter piece 24. An opening is created on the housing 21. The end cap 22 seals the opening. The electrode assembly 23 is disposed in the housing 21. The electrode assembly 23 includes a negative electrode plate 231 and a positive electrode plate 232. The negative electrode plate 231 includes a negative current collector 2311 and a negative active material layer 2312. The negative current collector 2311 includes a negative electrode body 2311a and a negative tab 2311b. The negative tab 2311b extends out from the second edge 2311c of the negative electrode body 2311a along the first direction X. At least a part of the negative active material layer 2312 is disposed on a surface of the negative electrode body 2311a. The positive electrode plate 232 includes a positive current collector 2321 and a positive active material layer 2322. The positive current collector 2321 includes a positive electrode body 2321a and a positive tab 2321b. The positive tab 2321b extends out from a first edge 2321c of the positive electrode body 2321a along the first direction X. The positive active material layer 2322 is disposed on a surface of the positive electrode body 2321a. Along a thickness direction Y of the negative electrode body 2311a, a projection of the positive active material layer 2322 on the negative electrode plate 231 falls into the negative active material layer 2312. Two electrode terminals 22a are disposed on the end cap 22. The two electrode terminals 22a are a positive electrode terminal and a negative electrode terminal respectively. Two adapter pieces 24 are disposed. One adapter piece 24 is connected to the positive tab 2321b and the positive electrode terminal, and the other adapter piece 24 is connected to the negative tab 2311b and the negative electrode terminal. The negative electrode plate 231 further includes a first insulation layer 2313. The first insulation layer 2313 is disposed on the negative current collector 2311. Along the thickness direction Y of the negative electrode body 2311a, a projection of the second edge 2311c on the negative electrode plate 231 falls into the first insulation layer 2313. The positive electrode plate 232 further includes a second insulation layer 2323. The second insulation layer 2323 is disposed on the positive current collector 2321, and the second insulation layer 2323 extends to the first edge 2321c. The second insulation layer 2323 and the positive active material layer 2322 are arranged along the first direction X. Along the thickness direction Y of the negative electrode body 2311a, a projection of the second insulation layer 2323 on the negative electrode plate 231 falls into the first insulation layer 2313. The positive active material layer 2322 includes a third edge 2322a close to the first edge 2321c. Along the first direction X from the positive electrode body 2321a to the positive tab 2321b, an excess dimension by which the negative active material layer 2312 exceeds the third edge 2322a is C1, satisfying: 1 mm ≤ C1 ≤ 2 mm.

In the battery cell 20 according to an embodiment of this application, the first insulation layer 2313 is disposed on the negative current collector 2311, and the second insulation layer 2323 is disposed on the positive current collector 2321. The projection of the first edge 2321c on the negative electrode plate 231 falls into the first insulation layer 2313, the projection of the second insulation layer 2323 on the negative electrode plate falls into the first insulation layer 2313, and the second insulation layer 2323 extends to the first edge 2321c, so as to enhance the effect of insulation between the negative electrode plate 231 and an edge of the positive electrode body 2321a, where the edge is formed when cutting out the positive tab 2321b from the positive electrode body. This reduces the risk that the burrs on the first edge 2321c pierce the separator 233 to cause direct contact and a short circuit between the positive electrode plate and the negative current collector 2311 or the negative active material layer 2312, and improves the safety of the battery cell 20.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery cell, comprising an electrode assembly, wherein the electrode assembly comprises:
a negative electrode plate, comprising a negative current collector and a negative active material layer, wherein the negative current collector comprises a negative electrode body and a negative tab, the negative tab protrudes beyond the negative electrode body, and at least a part of the negative active material layer is disposed on a surface of the negative electrode body; and
a positive electrode plate, comprising a positive current collector and a positive active material layer, wherein the positive current collector comprises a positive electrode body and a positive tab, the positive tab extends out from a first edge of the positive electrode body along a first direction, the positive active material layer is disposed on a surface of the positive electrode body, and, along a thickness direction of the negative electrode body, a projection of the positive active material layer on the negative electrode plate falls within the negative active material layer, wherein
the negative electrode plate further comprises a first insulation layer, the first insulation layer is disposed on the negative current collector, and, along the thickness direction of the negative electrode body, a projection of the first edge on the negative electrode plate falls within the first insulation layer.

2. The battery cell according to claim 1, wherein the negative electrode body comprises a second edge close to the first edge, and the second edge exceeds the first edge along the first direction.

3. The battery cell according to claim 2, wherein the first insulation layer covers a part of the negative active material layer.

4. The battery cell according to claim 3, wherein the negative active material layer extends to the second edge.

5. The battery cell according to any one of claims 2 to 4, wherein the negative tab extends out from the second edge, and along the first direction, from the negative electrode body to the negative tab, the first insulation layer exceeds the second edge and covers a part of the negative tab.

6. The battery cell according to claim 5, wherein, along the first direction, an overlay dimension by which the first insulation layer covers the negative tab is E1, satisfying: 0 < E1 ≤ 8 mm, and preferably 1 mm ≤ E1 ≤ 3 mm.

7. The battery cell according to any one of claims 1 to 6, wherein along the first direction, an overlay dimension by which the first insulation layer covers the negative electrode body is F1, satisfying: 3 mm ≤ F1 ≤ 10 mm.

8. The battery cell according to any one of claims 1 to 7, wherein the negative active material layer comprises a thinned region and a main region, the thinned region and the main region are arranged along the first direction, a thickness of the thinned region is less than a thickness of the main region, and the first insulation layer covers the thinned region.

9. The battery cell according to claim 8, wherein along the thickness direction of the negative electrode body, a sum of thicknesses of the first insulation layer and the thinned region is H1, and a thickness of the main region is H2, satisfying: -2 mm ≤ H1 - H2 ≤ 2 mm.

10. The battery cell according to any one of claims 1 to 9, wherein the positive active material layer comprises a third edge close to the first edge; and
along the first direction, from the positive electrode body to the positive tab, an excess dimension by which the negative active material layer exceeds the third edge is C1, satisfying: 0.5 mm ≤ C1 ≤ 3 mm, and preferably 1 mm ≤ C1 ≤ 2 mm.

11. The battery cell according to any one of claims 1 to 10, wherein the positive electrode plate further comprises a second insulation layer, the second insulation layer is disposed on the positive current collector, and the second insulation layer extends to the first edge.

12. The battery cell according to claim 11, wherein the second insulation layer and the positive active material layer are arranged along the first direction.

13. The battery cell according to claim 11 or 12, wherein along the first direction, an overlay dimension by which the second insulation layer covers the positive electrode body is M1, and a dimension of the positive electrode body is M2, satisfying: 0.2% ≤ M1/M2 ≤ 2.8%, and preferably 0.4% ≤ M1/M2 ≤ 2%.

14. The battery cell according to any one of claims 11 to 13, wherein along the thickness direction of the negative electrode body, a projection of the second insulation layer on the negative electrode plate falls within the first insulation layer.

15. The battery cell according to claim 14, wherein along the first direction, from the positive tab to the positive electrode body, the first insulation layer exceeds the second insulation layer.

16. The battery cell according to any one of claims 11 to 15, wherein along the first direction, a dimension of the negative active material layer is D1, a dimension of the positive active material layer is D2, and a dimension of the second insulation layer is M1, satisfying: M1 ≤ (D1 - D2)/2.

17. The battery cell according to any one of claims 11 to 16, wherein the second insulation layer comprises a fourth edge close to the first edge; and
along the first direction, from the positive electrode body to the positive tab, an excess dimension by which the first insulation layer exceeds the fourth edge is C2, satisfying: 0 < C2 ≤ 2.5 mm.

18. The battery cell according to any one of claims 11 to 17, wherein along the first direction, an overlay dimension by which the second insulation layer covers the positive electrode body is M1, satisfying: 0.3 mm ≤ M1 ≤ 1.5 mm, and preferably 0.5 mm ≤ M1 ≤ 1 mm.

19. The battery cell according to any one of claims 11 to 18, wherein along the first direction, from the positive electrode body to the positive tab, the second insulation layer exceeds the first edge and covers a part of the positive tab.

20. The battery cell according to claim 19, wherein along the first direction, an overlay dimension by which the second insulation layer covers the positive tab is E2, satisfying: 0 < E2 ≤ 8 mm, and preferably 1 mm ≤ E2 ≤ 3 mm.

21. The battery cell according to any one of claims 11 to 20, wherein a thickness of the second insulation layer is H3, a thickness of the positive current collector is H4, and a thickness of the positive active material layer is H5, satisfying: H3 > H4, and H3 ≤ H5.

22. The battery cell according to any one of claims 11 to 21, wherein the second insulation layer comprises a ceramic layer or a macromolecular polymer layer.

23. The battery cell according to any one of claims 1 to 22, wherein the first insulation layer comprises a ceramic layer.

24. The battery cell according to claim 23, wherein the ceramic layer comprises a water-based ceramic slurry or an oil-based ceramic slurry.

25. A battery, comprising a box and a plurality of battery cells according to any one of claims 1 to 24, wherein the plurality of battery cells are disposed in the box.

26. An electrical device, comprising the battery cell according to any one of claims 1 to 24, wherein the battery cell is configured to provide electrical energy.
